# EUROPEAN PATENT APPLICATION

(11) **EP 4 528 899 A1**
(43) Date of publication of application: **26.03.2025**
(21) Application number: 23898012.2
(22) Date of filing: 08.09.2023
(51) Int. Cl.: H01M 50/358, H01M 50/383, H01M 50/211

(54) **BATTERY MODULE AND BATTERY PACK INCLUDING SAME**

(30) Priority: 30.11.2022 KR 20220164567
(71) Applicant: LG Energy Solution, Ltd., Seoul 07335 (KR)
(72) Inventor: HEO, Samhoe, Daejeon 34122 (KR); JUNG, Kitaek, Daejeon 34122 (KR); PARK, Jeonghoon, Daejeon 34122 (KR); HAN, Minhee, Daejeon 34122 (KR); HAN, Seungwon, Daejeon 34122 (KR)
(74) Representative: Plasseraud IP
(86) International application number: PCT/KR2023/013497
(87) International publication number: WO 2024/117478

(57) **Abstract**

A battery module includes a battery cell stack in which a plurality of battery cells are stacked, a module frame storing the battery cell stack, and a venting frame disposed to cover one surface of the module frame. The venting frame includes a first venting layer disposed to be adjacent to the module frame and including a plurality of first venting passages and a second venting layer disposed outside the first venting layer and including a second venting passage.

## Description

### [Technical Field]

### CROSS-REFERENCE TO RELATED APPLICATION

This application claims priority to and the benefit of Korean Patent Application No. 10-2022-0164567 filed in the Korean Intellectual Property Office on November 30, 2022, the entire contents of which are incorporated herein by reference.

The disclosure relates to a battery module and a battery pack including the same, and more particularly, to a battery module having enhanced safety and a battery pack including the same.

### [Background Art]

In modern society, as the use of portable devices, such as mobile phones, laptops, camcorders, and digital cameras, has become routine, technologies in fields related to the above mobile devices have been actively developed. In addition, rechargeable secondary batteries have been used as a power source of electric vehicles (EV), hybrid electric vehicles (HEV), and plug-in hybrid electric vehicles (P-HEV) in order to solve air pollution from existing gasoline vehicles that use fossil fuels, and the need for development of secondary batteries has increased.

Currently commercialized secondary batteries include nickel cadmium batteries, nickel hydrogen batteries, nickel zinc batteries, and lithium secondary batteries. Among them, lithium secondary batteries rarely have a memory effect compared to nickel-based secondary batteries, so lithium secondary batteries are spotlighted with advantages that they are freely charged and discharged, have a low self-discharge rate, and a high energy density.

These lithium secondary batteries mainly use lithium-based oxide and carbon material as positive and negative electrode active materials, respectively. A lithium secondary battery includes an electrode assembly in which a positive electrode plate and a negative electrode plate coated with the positive electrode active material and the negative electrode active material are disposed with a separator therebetween and an outer case, that is, a battery case, that seals and stores the electrode assembly together with an electrolyte solution.

Generally, lithium secondary batteries may be classified into can-type secondary batteries in which the electrode assembly is built in a metal can and pouch-type secondary batteries in which the electrode assembly is built in a pouch of an aluminum laminate sheet, depending on the shape of the outer case.

In the case of secondary batteries used in small devices, two to three battery cells are arranged, but in the case of secondary batteries used in medium to large devices, such as automobiles, a battery module formed by electrically connecting multiple battery cells is used. In such a battery module, multiple battery cells are connected to each other in series or parallel to form a battery cell stack, thereby improving capacity and power. In addition, one or more battery modules may be mounted together with various control and protection systems, such as a battery management system (BMS) and a cooling system, to form a battery pack.

Meanwhile, battery modules including multiple battery cells may be gathered together and installed in medium to large devices, such as automobiles. The temperature of battery modules including multiple battery cells or battery packs including these battery modules may increase rapidly and severely as heat from multiple battery cells is added up in a small space. In other words, in the case of battery modules in which multiple battery cells are stacked and battery packs equipped with these battery modules, high power may be obtained, but it is not easy to remove heat generated by the battery cells during charging and discharging, and thus, the possibility of explosion or ignition increases. When an explosion or ignition occurs, it is necessary to delay the ignition and the spread of occurring flames. At the same time, if a venting gas occurring in the battery cell is not quickly discharged at the beginning of thermal runaway, gas accumulates inside the module, further increasing the risk of ignition and explosion, and thus, there is a need to quickly discharge the venting gas in the module to the outside. Therefore, there is a need for a method that may delay flame transfer to adjacent modules, while discharging internal venting gas quickly, when an event, such as thermal runaway, occurs within a battery module or battery pack.

### [Disclosure]

### [Technical Problem]

The disclosure attempts to provide a battery module and a battery pack including the same capable of suppressing or delaying external discharge of flames or the like, while quickly discharging venting gas generated at an early stage, when an event, such as thermal runaway, occurs inside a battery module.

However, the problems to be solved by the exemplary embodiments of the disclosure are not limited to the above-described problems and may be expanded in various ways within the scope of the technical idea included in the disclosure.

### [Technical Solution]

According to an exemplary embodiment, a battery module includes: a battery cell stack in which a plurality of battery cells are stacked; a module frame storing the battery cell stack; and a venting frame disposed to cover a first surface of the module frame, wherein the venting frame includes a first venting layer disposed to be adjacent to the module frame and including a plurality of first venting passages and a second venting layer disposed outside the first venting layer and including a second venting passage.

The plurality of first venting passages may be straight flow paths formed in a longitudinal direction of the battery module.

The second venting passage may be a meandering flow path formed in zigzags throughout the second venting layer.

The module frame may include at least one vent hole formed in the first surface of the module frame, and the at least one vent hole is connected to at least one first inlet formed in the first venting layer.

The first venting layer includes at least one first partition separating the plurality of first venting passages from each other.

The at least one first partition may extend in the longitudinal direction of the battery module.

The at least one first inlet includes a plurality of first inlets and the plurality of first venting passages each may include a one of the plurality of first inlets and a first outlet disposed opposite to the first inlet.

The second venting layer may include at least one second inlet formed on one surface in contact with the first venting layer, and the at least one second inlet is connected to each first outlet.

The second venting passage may include a second outlet formed on a surface located opposite the first venting layer and on an end opposite the second inlet in the longitudinal direction of the battery module.

The second venting layer may include a plurality of second partitions forming the second venting passage.

The plurality of second partitions extend in a different direction from the first partition.

A length of the second venting passage may be longer than a length of each of the first venting passages.

According to another exemplary embodiment, a battery pack includes one or more of the battery module described above.

### [Advantageous Effects]

According to exemplary embodiments of the disclosure, the battery module having improved safety by quickly discharging venting gas generated during ignition inside the battery module and suppressing or delaying the spread of flame may be provided.

### [Description of the Drawings]

FIG. 1 is a diagram illustrating a battery module according to an exemplary embodiment of the disclosure.
FIG. 2 is an exploded perspective view of the battery module of FIG. 1.
FIG. 3 is a cross-section view of a venting frame taken along line A-A' in FIG. 2.
FIG. 4 is a top view of a first venting layer of the venting frame of FIG. 3.
FIG. 5 is a top view of a second venting layer of the venting frame of FIG. 3.

### [Mode for Invention]

Hereinafter, exemplary embodiments of the disclosure will be described in detail with reference to the accompanying drawings to allow those skilled in the art to practice the disclosure. The disclosure may be implemented in various different forms and is not limited to the examples as described herein.

In the drawings, parts irrelevant to the description are omitted to clearly describe the disclosure, and like reference numerals denote like elements throughout the specification.

The size and thickness of each component shown in the drawings may be arbitrarily shown for convenience of explanation, and therefore, the disclosure is not necessarily limited to the shown exemplary embodiments in the drawings. In the drawings, the thickness of layers, films, panels, regions, etc., are exaggerated for clarity. Also, in the drawings, the thickness of partial layers and regions may be exaggerated for convenience of explanation.

It will be understood that when an element, such as a layer, film, region, or substrate is referred to as being "on" another element, it may be directly on the other element or intervening elements may also be present. In contrast, when an element is referred to as being "directly on" another element, there are no intervening elements present. Further, when an element is "above" or "on" the reference portion, it may mean that the element is positioned above or below the reference portion, and it may not necessarily mean that the element is "above" or "on" toward an opposite direction of gravity.

In addition, unless explicitly described to the contrary, the word "comprise", and variations, such as "comprises" or "comprising", will be understood to imply the inclusion of stated elements but not the exclusion of any other elements.

Hereinafter, a battery module according to an exemplary embodiment of the disclosure will be described with reference to the drawings.

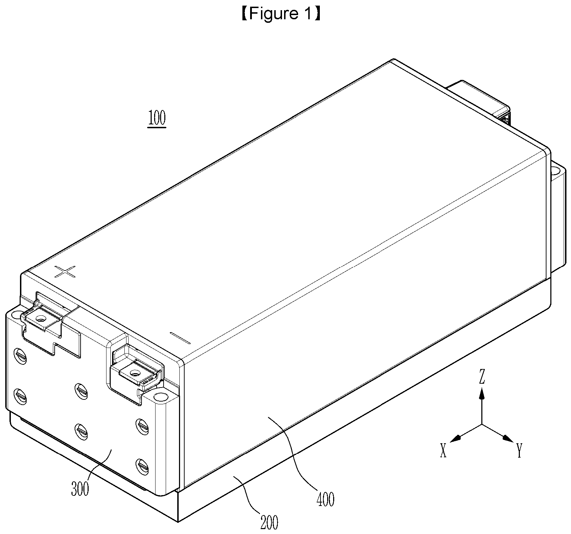

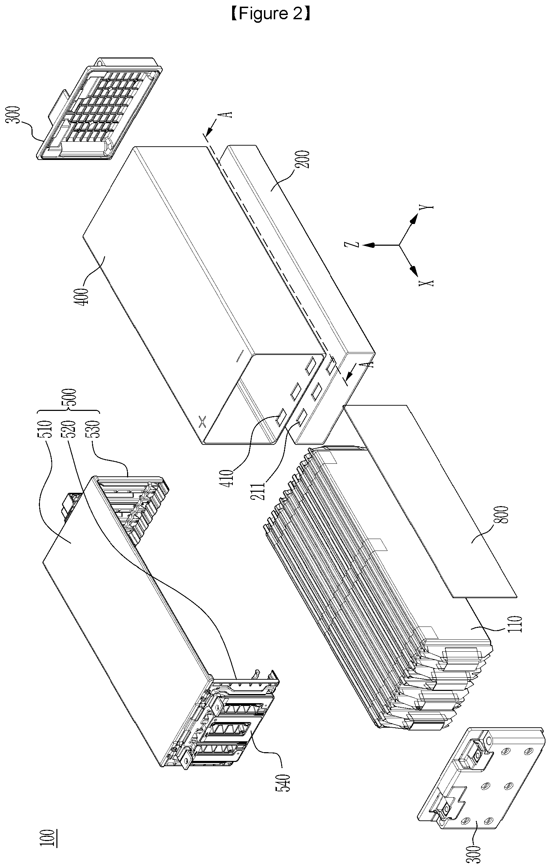

FIG. 1 is a diagram illustrating a battery module according to an exemplary embodiment of the disclosure, and FIG. 2 is an exploded perspective view of the battery module of FIG. 1.

Referring to FIGS. 1 and 2, a battery module 100 according to an exemplary embodiment of the disclosure includes a battery cell stack 110 including one or more battery cells, a module frame 400 storing the battery cell stack 110, and a venting frame 200 disposed to cover one surface of the module frame 400.

The module frame 400 has open front and rear surfaces and may include an end plate 300 covering the front and rear surfaces. That is, in FIG. 2, both ends in an X-axis direction are open, and the end plate 300 covers the ends. In FIG. 2, the module frame 400 is shown as having an integrated square tube shape, but without being limited thereto, the module frame 400 may have a shape in which an upper plate is coupled to a U-shaped frame having a lower surface and side walls or a shape in which a lower plate is coupled to an inverted U-shaped frame having an upper surface and side walls.

In addition, a busbar frame 500 accommodated in the module frame 400 may be provided along with the battery cell stack 110. The busbar frame 500 includes an upper frame 510 located on the top of the battery cell stack 110, a front frame 520 located on the front of the battery cell stack 110, and a rear surface located on the rear of the battery cell stack 110, and a busbar 540 connected to electrode leads of battery cells constituting the battery cell stack 110 may be mounted on the front frame 520 and the rear frame 530.

Meanwhile, although not shown, a thermally conductive resin layer (not shown) formed by injecting a thermally conductive resin may be disposed between a lower surface of the battery cell stack 110 and the module frame 400. In addition, a heat sink 800 may be provided on a side surface of the battery cell stack 110 and may be accommodated together in the module frame 400.

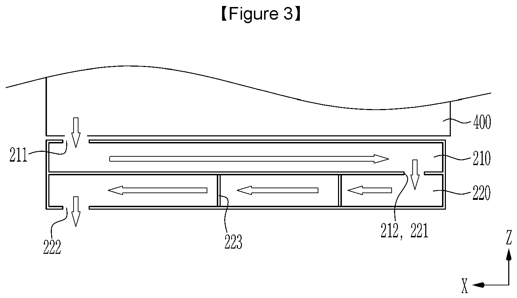

The venting frame 200 may be disposed on one surface of the module frame 400, e.g., on a lower surface of the module frame 400 in the present exemplary embodiment. Hereinafter, a configuration of the venting frame 200 will be described in more detail with further reference to FIGS. 3 to 5.

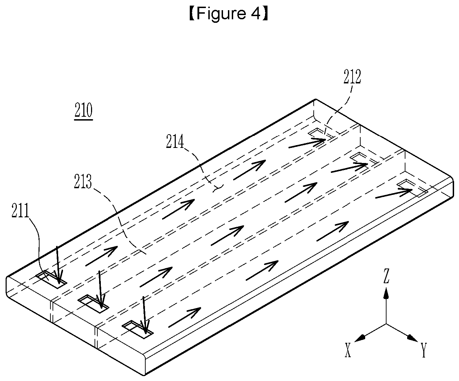

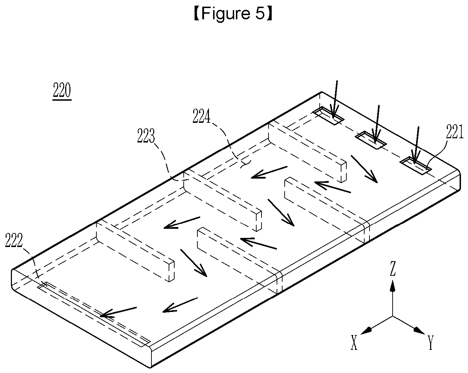

FIG. 3 is a cross-sectional view of the venting frame taken along line A-A' of FIG. 2, FIG. 4 is a top view of a first venting layer of the venting frame of FIG. 3, and FIG. 5 is a top view of a second venting layer of the venting frame of FIG. 3.

The venting frame 200 may be disposed on one surface of the module frame 400, for example, on the lower surface of the module frame 400 as in the present exemplary embodiment. **The** venting frame 200 may have a dual structure including a first venting layer 210 disposed to be adjacent to the module frame 400 and a second venting layer 220 disposed to be adjacent to the first venting layer 210 and outside the first venting layer 210. **In** addition, the venting frame 200 may have a plate shape to cover one surface of the module frame 400 and may be formed to have a dual structure by a plurality of plates. Here, the plate forming the venting frame 200 may be formed of a heat-resistant material, such as metal, and may be coupled to the module frame 400 by a method, such as welding, but is not limited thereto and various methods may be used. The venting frame 200 includes an inlet and an outlet through which venting gas discharged from the inside of the module frame 400 may flow in and be discharged to the outside and a plurality of passages therebetween.

That is, at least one vent hole 410 through which venting gas or flame may be discharged when thermal runaway occurs is formed on one surface of the module frame 400 facing the venting frame 200. Also, at least one first inlet 211 communicating with each of the vent holes 410 is formed on one surface of the first venting layer 210 facing one surface of the module frame 400. The venting gas flowing into the first inlet 211 passes through the first venting layer 210 and the second venting layer 220 and is discharged to the outside.

At this time, a plurality of first venting passages 214 formed in the first venting layer 210 are formed as straight flow paths formed in a longitudinal direction of the battery module 100, that is, in an X-direction in the drawing. In addition, the plurality of first venting passages 214 are formed to be separated or isolated by at least one first partition 213. **That** is, the first inlet 211 communicating with the vent hole 410 is formed at one end of each first venting passage 214 separated by the first partition 213, and a first outlet 212 through which the venting gas is discharged is formed on the opposite side, that is, at the other end located on the opposite side in the X-axis direction. Accordingly, the venting gas flowing into each first inlet 211 may be discharged through the first outlet 212 via the first venting passage 214, without diffusion or reversal, even within the first venting layer 210. At this time, the first partition 213 may be formed of the same material as the plate forming the venting frame 200 or may be formed of a material having an equivalent degree of heat resistance.

**In** this manner, by forming the first venting passage 214 included in the first venting layer 210 as a straight flow path, the venting gas may be quickly discharged to the second venting layer 220 without flow resistance. **That** is, by quickly discharging the initially generated venting gas or flames to the next passage, that is, the second venting layer 220, the risk of explosion increasing as the venting gas or flames are accumulated inside the module frame 400 may be prevented.

At least one second inlet 221 communicating with the first outlet 212 is formed on one surface of the second venting layer 220 facing the first venting layer 210. **In** the present exemplary embodiment, as shown in FIG. 3, the first outlet 212 and the second inlet 221 are shown as being formed in the same configuration on one plate. However, without being limited thereto, and each venting layer may also be formed to include a separate plate.

The venting gas flowing in from the first venting layer 210 through the second inlet 221 moves through a second venting passage 224 along the path indicated by the arrow in FIG. 5. At this time, the second venting passage 224 may be formed as a meandering flow path having a zigzag or winding shape across the second venting layer 220, as shown in FIG. 5. For example, as shown in FIG. 5, a second partition 223 parallel to the width direction (a Y direction in the drawing) of the battery module 100 is disposed to alternately contact both side walls, thereby obtaining the second venting passage 224 having a meandering path. However, without being limited thereto, a path that may increase the movement path of the venting gas within the second venting layer 220, especially, a configuration in which the second venting passage 224 is longer than the first venting passage 214 of the first venting layer 210 may be appropriately adopted. In this manner, by increasing resistance of the path along which the venting gas moves, discharge of the venting gas to the outside may be suppressed or delayed as much as possible. At this time, the second partition 223 may be formed of the same material as that of the plate forming the venting frame 200 or may be formed of a material having an equivalent degree of heat resistance. In addition, in the cross-sectional view of FIG. 3, the arrows indicating the path of the venting gas in the second venting layer 220 appears as if it is blocked by the second partition 223, but this is only a cross-sectional view, and as shown in FIG. 5, venting gas may move in zigzags along the meandering flow path even if is it blocked by the partition.

In the second venting layer, a second outlet 222 is formed on the opposite side of the portion in which the second inlet 221 is formed, that is, at the opposite end of the battery module 100 in the longitudinal direction (the X-axis direction). The venting gas moving along the second venting passage 224 may be disposed to the outside through the second outlet 222. In this manner, by forming the second venting passage 224 as a zigzag meandering flow path in the second venting layer 220, it is possible to delay as much as possible the venting gas from being discharged to the outside and suppress flames from being discharged to the outside, thereby suppressing the transfer of flames.

According to an exemplary embodiment of the disclosure, when an event, such as thermal runaway occurs in the battery cell stack 110 inside the module frame 400, the venting gas generated at an initial stage may be discharged to the outside of the module frame 400 quickly through the first venting passage 214, thereby eliminating the risk of explosion due to accumulation of venting gas. At the same time, by further providing the second venting passage 224 communicating with the first venting passage 214 and having a high-resistance flow path shape, discharge of flames generated from the module frame 400 to the outside may be delayed as much as possible, and thus safety may be improved by suppressing flame transfer to adjacent modules.

One or more battery modules according to the present exemplary embodiment described above may be mounted together with various control and protection systems, such as a battery management system (BMS) and a cooling system to form a battery pack.

The battery module or battery pack may be applied to various devices. These devices may be applied to transportation units, such as electric bicycles, electric cars, and hybrid vehicles, but are not limited thereto and may be applied to various devices that may use secondary batteries.

The embodiments of the present disclosure have been described in detail, but the scope of the present disclosure is not limited thereto and various variants and modifications by a person skilled in the art using a basic concept of the present disclosure defined in claims also belong to the scope of the present disclosure.

### [Description of reference numerals]

100: battery module
110: battery cell stack
200: venting frame
210: first venting layer
214: first venting passage
220: second venting layer
224: second venting passage
300: end plate
400: module frame
410: vent hole
500: busbar frame

## Claims

1. A battery module comprising:
a battery cell stack in which a plurality of battery cells are stacked;
a module frame storing the battery cell stack; and
a venting frame disposed to cover a first surface of the module frame,
wherein the venting frame includes
a first venting layer disposed to be adjacent to the module frame and including a plurality of first venting passages; and
a second venting layer disposed outside the first venting layer and including a second venting passage.

2. The battery module of claim 1, wherein the plurality of first venting passages are straight flow paths formed in a longitudinal direction of the battery module.

3. The battery module of claim 2, wherein the second venting passage is a meandering flow path formed in zigzags throughout the second venting layer.

4. The battery module of claim 3, wherein the module frame includes at least one vent hole formed in the first surface of the module frame, and
wherein the at least one vent hole is connected to at least one first inlet formed in the first venting layer.

5. The battery module of claim 4, wherein the first venting layer includes at least one first partition separating the plurality of first venting passages from each other.

6. The battery module of claim 5, wherein the at least one first partition extends in the longitudinal direction of the battery module.

7. The battery module of claim 5, wherein the at least one first inlet includes a plurality of first inlets, and
wherein the plurality of first venting passages each include one of the plurality of first inlets and a first outlet disposed opposite to the first inlet.

8. The battery module of claim 7, wherein the second venting layer includes at least one second inlet formed on one surface in contact with the first venting layer, and
wherein the at least one second inlet is connected to each first outlet.

9. The battery module of claim 8, wherein the second venting passage includes a second outlet formed on a surface located opposite of the first venting layer and on an end opposite the second inlet in the longitudinal direction of the battery module.

10. The battery module of claim 5, wherein the second venting layer includes a plurality of second partitions forming the second venting passage.

11. The battery module of claim 10, wherein the plurality of second partitions extend in a different direction from the first partition.

12. The battery module of claim 1, wherein a length of the second venting passage is longer than a length of each of the first venting passages.

13. A battery pack comprising one or more of the battery module according to claim 1.
